(19) Europäisches Patentamt
European Patent Office
Office européen des brevets

(11) **EP 4 060 560 B1**

(12) # EUROPEAN PATENT SPECIFICATION

(45) Date of publication and mention
of the grant of the patent:
**12.06.2024  Bulletin 2024/24**

(21) Application number: **21162660.1**

(22) Date of filing: **15.03.2021**

(51) International Patent Classification (IPC):
**G06N 3/084** (2023.01)       **G06N 3/047** (2023.01)
**G06N 3/045** (2023.01)       **G06T 7/50** (2017.01)

(52) Cooperative Patent Classification (CPC):
**G06N 3/084; G06N 3/045; G06N 3/047; G06T 7/50;**
G06T 2207/10024; G06T 2207/10028;
G06T 2207/20084; G06T 2207/30201;
G06T 2207/30236

(54) **SYSTEMS, METHODS, AND STORAGE MEDIA FOR GENERATING SYNTHESIZED DEPTH DATA**

SYSTEME, VERFAHREN UND SPEICHERMEDIEN ZUR ERZEUGUNG SYNTHETISIERTER TIEFENDATEN

SYSTÈMES, PROCÉDÉS ET SUPPORTS D'ENREGISTREMENT POUR GÉNÉRER DES DONNÉES DE PROFONDEUR SYNTHÉTISÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.09.2022  Bulletin 2022/38**

(73) Proprietor: **Irdeto B.V.**
**2132 LS Hoofddorp (NL)**

(72) Inventors:
• **ETEMAD, Ali**
 **Kanata, ON K2M 0H3 (CA)**
• **SEPAS-MOGHADDAM, Alireza**
 **Kingston, ON K7K 6X3 (CA)**
• **UPPAL, Hardik**
 **Vancouver, BC V5W 2N1 (CA)**
• **GREENSPAN, Michael**
 **Kingston, ON K7M 3G7 (CA)**
• **SOUKUP, Martin**
 **2132 LS Hoofddorp (NL)**

(74) Representative: **Boult Wade Tennant LLP**
**Salisbury Square House**
**8 Salisbury Square**
**London EC4Y 8AP (GB)**

(56) References cited:
• YEVHEN KUZNIETSOV ET AL: "Semi-Supervised Deep Learning for Monocular Depth Map Prediction", ARXIV.ORG, CORNELL UNIVERSITY LIBRARY, 201 OLIN LIBRARY CORNELL UNIVERSITY ITHACA, NY 14853, 9 February 2017 (2017-02-09), XP080747211, DOI: 10.1109/CVPR.2017.238
• JAEHOON CHO ET AL: "A Large RGB-D Dataset for Semi-supervised Monocular Depth Estimation", ARXIV.ORG, CORNELL UNIVERSITY LIBRARY, 201 OLIN LIBRARY CORNELL UNIVERSITY ITHACA, NY 14853, 23 April 2019 (2019-04-23), XP081172568,
• PILZER ANDREA ET AL: "Unsupervised Adversarial Depth Estimation Using Cycled Generative Networks", 2018 INTERNATIONAL CONFERENCE ON 3D VISION (3DV), IEEE, 5 September 2018 (2018-09-05), pages 587-595, XP033420097, DOI: 10.1109/3DV.2018.00073 [retrieved on 2018-10-12]
• PILZER ANDREA ET AL: "Refine and Distill: Exploiting Cycle-Inconsistency and Knowledge Distillation for Unsupervised Monocular Depth Estimation", 2019 IEEE/CVF CONFERENCE ON COMPUTER VISION AND PATTERN RECOGNITION (CVPR), IEEE, 15 June 2019 (2019-06-15), pages 9760-9769, XP033686835, DOI: 10.1109/CVPR.2019.01000 [retrieved on 2020-01-08]

EP 4 060 560 B1

**(Cont. next page)**

• LIN WANG ET AL: "Knowledge Distillation and Student-Teacher Learning for Visual Intelligence: A Review and New Outlooks", ARXIV.ORG, CORNELL UNIVERSITY LIBRARY, 201 OLIN LIBRARY CORNELL UNIVERSITY ITHACA, NY 14853, 11 October 2020 (2020-10-11), XP081782915,

**Description**

**FIELD OF THE DISCLOSURE**

The present disclosure relates to systems, methods, and storage media for generating synthesized depth data based on 2-dimensional data to enhance the 2-dimensional data for image recognition and other purposes.

**BACKGROUND**

Facial recognition is an active research area, which has recently witnessed considerable progress thanks to the availability of known deep neural networks such as AlexNet, VGG, FaceNet, and ResNet. A "neural network" (sometimes referred to as an "artificial neural network"), as used herein, refers to a network or circuit of neurons which can be implemented as computer-readable code executed on one or more computer processors. A neural network can be composed of artificial neurons or nodes for solving artificial intelligence (AI) problems. The connections of the nodes are modeled as weights. A positive weight reflects an excitatory connection, while negative values mean inhibitory connections. Inputs can be modified by a weight and summed. This activity is referred to as a linear combination. Finally, an activation function controls the amplitude of the output. For example, an acceptable range of output is usually between 0 and 1, or it could be -1 and 1. Neural networks may be used for predictive modeling, adaptive control and applications where they can be trained via a dataset. Self-learning resulting from experience can occur within networks, which can derive conclusions from a complex and seemingly unrelated set of information. Deep neural networks can learn discriminative representations that have been able to tackle wide range of challenging visual tasks, such as image recognition, and even surpass human recognition ability in some instances.

2-dimensional based image recognition methods, such as facial recognition methods, tend to be generally sensitive to environmental variations like illumination, occlusions, viewing angles and poses. By utilizing depth information alongside 2-dimensional image data, such as RGB data, models can learn more robust representations of faces and other objects, as depth provides complementary geometric information about the intrinsic shape of the face, further boosting recognition performance. Additionally, RGB and Depth (RGB-D) facial recognition methods are known to be less sensitive to pose and illumination changes. Nonetheless, while RGB and other 2-dimensional sensors are ubiquitous, depth sensors have been less prevalent, resulting in an over-reliance on 2-dimensional data alone.

Generative Adversarial Networks (GANs) and variants thereof (e.g., cGan, pix2pix, CycleGan, StackGAN, and StyleGAN) have proven to be viable solutions for data synthesis in many application domains. In the context of facial images, GANs have been widely used to generate very high-quality RGB images when trained on large-scale datasets such as FFHQ and CelebA-HQ. In a few instances, is has been attempted to synthesize depth from corresponding RGB images. For example, Stefano Pini, Filippo Grazioli, Guido Borghi, Roberto Vezzani, and Rita Cucchiara, Learning to generate facial depth maps, 2018 International Conference on 3D Vision (3DV), pages 634-642. IEEE, 2018; Dong-hoon Kwak and Seung-ho Lee, A novel method for estimating monocular depth using cycle gan and segmentation., Sensors, 20(9):2567, 2020; and Jiyun Cui, Hao Zhang, Hu Han, Shiguang Shan, and Xilin Chen, Improving 2D face recognition via discriminative face depth estimation. In International Conference on Biometrics, pages 140-147, 2018 teach various methods for synthesizing depth data from 2-dimensional data.

Although cGAN has achieved impressive results for depth synthesis using paired RGB-D sets, it does not easily generalize to new test examples for which paired examples are not available, especially when the images are from entirely different datasets with drastically different poses, expressions, and occlusions. CycleGAN attempts to overcome this shortcoming through unpaired training with the aim of generalizing well to new test examples. However, CycleGAN does not deal well with translating geometric shapes and features.

The majority of existing work in this area relies on classical non-deep techniques. Sun et al. (Zhan-Li Sun and Kin-Man Lam. Depth estimation of face images based on the constrained ica model,. IEEE transactions on information forensics and security, 6(2):360-370, 2011) teaches the use of images of different 2-dimensional face poses to create a 3D model. This was achieved by calculating the rotation and translation parameters with constrained independent component analysis and combining it with a prior 3D model for depth estimation of specific feature points. In a subsequent work (Zhan-Li Sun, Kin-Man Lam, and Qing-Wei Gao. Depth estimation of face images using the nonlinear least-squares model, IEEE transactions on image processing, 22(1): 17-30, 2012) a nonlinear least-squares model was exploited to predict the depth of specific facial feature points, and thereby inferring the 3-dimensional structure of the human face. Both these methods used facial landmarks obtained by detectors for parameter initialization making them highly dependent on landmark detection.

Liu et al. (Miaomiao Liu, Mathieu Salzmann, and Xuming He, Discrete-continuous depth estimation from a single image, Proceedings of the IEEE Conference on Computer Vision and Pattern Recognition, pages 716-723, 2014) modelled image regions as superpixels and used discrete-continuous optimization for depth estimation. In this context, the continuous variables encoded the depth of the superpixel while the discrete variables represented their internal relationships. In a later work, Zhu et al. (Wei Zhuo, Mathieu Salzmann, Xuming He, and Miaomiao Liu, Indoor scene structure analysis for single image depth estimation, Proceedings of the IEEE conference on computer vision and pattern recognition, pages 614-622, 2015) exploited the global structure of the scene, by constructing a hierarchical representation of local, mid-level, and large-scale layouts. They modeled the problem as conditional Markov random field with variables for each layer in the hierarchy. Kong et al. (Dezhi Kong, Yang Yang, Yun-Xia Liu, Min Li, and Hongying Jia, Effective 3d face depth estimation from a single 2d face image, 2016 16th International Symposium on Communications and Information Technologies (ISCIT), pages 221-230. IEEE, 2016) mapped a 3D dataset to 2D images by sampling points from the dense 3D data and combining it with RGB channel information. They then exploited face Delaunay triangulation to create a structure of facial feature points. The similarity of the triangles among the test images and the training set allowed them to estimate depth.

There have been attempts at synthesizing depth data using deep learning architectures. Cui et al. ( Jiyun Cui, Hao Zhang, Hu Han, Shiguang Shan, and Xilin Chen, Improving 2D face recognition via discriminative face depth estimation, International Conference on Biometrics, pages 140-147, 2018) teaches estimating depth from RGB data using a multi-task approach consisting of face identification along with depth estimation. This reference also dislcoses RGB-D recognition experiments to study the effectiveness of the estimated depth for the recognition task. Pini et al. (Florian Schroff, Dmitry Kalenichenko, and James Philbin, Facenet: A unified embedding for face recognition and clustering, Proceedings of the IEEE conference on computer vision and pattern recognition, pages 815-823, 2015) teaches using a cGAN architecture for facial depth map estimation from monocular intensity images. The method uses co-registered intensity and depth images to train the generator and learn relationships between the images for use in face verification.

Kwak et al. (Dong-hoon Kwak and Seung-ho Lee, A novel method for estimating monocular depth using cycle gan and segmentation., Sensors, 20(9):2567, 2020) proposes a solution based on CycleGAN for generating depth and image segmentation maps. To estimate the depth information, the image information is transformed to depth information while maintaining the characteristics of the RGB image, owing to the consistency loss of CycleGAN. This reference also teaches adding the consistency loss of segmentation to generate depth information where it is ambiguous or hidden by larger features of RGB image.

Early RGB-D facial recognition methods were proposed based on classical (non-deep) methods. Goswami et al. (Gaurav Goswami, Samarth Bharadwaj, Mayank Vatsa, and Richa Singh. On RGB-D face recognition using Kinect, International Conference on Biometrics: Theory, Applications and Systems, pages 1-6. IEEE, 2013) teaches fusing visual saliency and entropy maps extracted from RGB and depth data. This reference further teaches that histograms of oriented gradients can be used to extract features from image patches to then feed a classifier for identity recognition. Li et al. (Billy YL Li, Ajmal S Mian, Wanquan Liu, and Aneesh Krishna, Face recognition based on Kinect. Pattern Analysis and Applications, 19(4):977-987, 2016) teaches using 3D point-cloud data to obtain a pose-corrected frontal view using a discriminant color space transformation. This reference further teaches that corrected texture and depth maps can be sparse approximated using separate dictionaries earned during the training phase.

More recent efforts have focused on deep neural networks for RGB-D facial recognition. Chowdhury et al. (Anurag Chowdhury, Soumyadeep Ghosh, Richa Singh, and Mayank Vatsa, RGB-D face recognition via learning-based reconstruction, International Conference on Biometrics Theory, Applications and Systems, pages 1-7, 2016) teaches the use of Auto-Encoders (AE) to learn a mapping function between RGB data and depth data. The mapping function can then be used to reconstruct depth images from the corresponding RGB to be used for identification. Zhang et al. (Hao Zhang, Hu Han, Jiyun Cui, Shiguang Shan, and Xilin Chen, RGB-D face recognition via deep complementary and common feature learning, IEEE International Conference on Automatic Face & Gesture Recognition, pages 8-15, 2018) addressed the problem of multi-modal recognition using deep learning, focusing on joint learning of the CNN embedding to fuse the common and complementary information offered by the RGB and depth data together effectively.

Jiang et al. (Luo Jiang, Juyong Zhang, and Bailin Deng, Robust RGB-D face recognition using attribute-aware loss, IEEE Transactions on Pattern Analysis and Machine Intelligence, 42(10):2552-2566, 2020) proposes an attribute-aware loss function for CNN-based facial recognition which aimed to regularize the distribution of learned representations with respect to soft biometric attributes such as gender, ethnicity, and age, thus boosting recognition results. Lin et al. (Tzu-Ying Lin, Ching-Te Chiu, and Ching-Tung Tang, RGBD based multi-modal deep learning for face identification, IEEE International Conference on Acoustics, Speech and Signal Processing, pages 1668-1672, 2020) teaches an RGB-D face identification method by introducing new loss functions, including associative and discriminative losses, which are then combined with softmax loss for training.

Uppal et al. (Hardik Uppal, Alireza Sepas-Moghaddam, Michael Greenspan, and Ali Etemad, Depth as attention for face representation learning, International Conference of Pattern Recognition, 2020) teaches a two-level attention module to fuse RGB and depth modalities. The first attention layer selectively focuses on the fused feature maps obtained by a convolutional feature extractor that were recurrent learned through an LSTM layer. The second attention layer then focused on the spatial features of those maps by applying attention weights using a convolution layer. Uppal et al. also teaches that the features of depth images can be used to focus on regions of the face in the RGB images that contained more prominent person-specific information.

## SUMMARY

Disclosed implementations include a depth generation method using a novel teacher-student GAN architecture (TS-GAN) to generate depth images for 2-dimensional images, and thereby enhance the 2-dimensional data, where no corresponding depth information is available. An example model consists of two components, a teacher and a student. The teacher consists of a fully convolutional encoder-decoder network as a generator along with a fully convolution classification network as the discriminator. The generator part of a GAN learns to create data by incorporating feedback from a discriminator. It learns to make the discriminator classify its output as real. The discriminator in a GAN is simply a classifier. It distinguishes real data from the data created by the generator. A discriminator can use any network architecture appropriate to the type of data it's classifying. In the disclosed implementations, the generator takes RGB images as inputs and aims to output the corresponding depth images. In essence, the teacher aims to learn an initial latent mapping between RGB and co-registered depth images.

The student itself consists of two generators in the form of encoder-decoders, one of which is "shared" with the teacher, along with a fully convolutional discriminator. The term "shared", as used herein to describe the relationship between the generators, means that the generators operate using the same weightings. The generators can be a single instance or different instances of a generator. Further, the generators can be implemented on the same physical computing device or in distinct computing devices. The student takes as its input an RGB image for which the corresponding depth image is not available and maps it onto the depth domain as guided by the teacher to generate synthesized depth data (also referred to as "hallucinated" depth data herein). The student is operative to further refine the strict mapping learned by the teacher and allow for better generalization through a less constrained training scheme.

One aspect of the disclosed implementations is a computer-implmented method for training a neural network which is General Adversarial Network (GAN) to determine mapping function weightings that are optimized for generating synthesized depth image data from 2-dimensional image data, the method comprising: receiving training data, the training data including multiple sets of 2-dimensional image data and corresponding co-registered depth image data; training a first generator of the GAN, with the training data, to develop a set of mapping functions weightings for mapping between sets of 2-dimensional image data and corresponding co-registered depth image data; applying the mapping function weightings, by a second generator of the GAN, to a first set of 2-dimensional image data, to thereby generate synthesized depth data corresponding to the set of 2-dimensional image data; processing the synthesized depth data, by an inverse generator of the GAN, to transform the depth data to a second set of 2-dimensional image data; comparing the first set of 2-dimensional image data to the second set of 2-dimensional image data and generating an error signal based on the comparison; adjusting the set of mapping function weightings based on the error signal; and repeating the applying, processing comparing and adjusting steps until specified end criterion is satisfied.

Another aspect of the disclosed implementations is a computing system configured to train neural network which is General Adversarial Network (GAN) to determine mapping function weightings that are optimized for generating synthesized depth image data from 2-dimensional image data, the system comprising: at least one hardware computer processor operative to execute computer-readable instructions; and at least one non-transient memory device storing computer executable instructions thereon, which when executed by the at least one hardware computer processor, cause the at least one hardware computer processor to conduct a method of: receiving training data, the training data including multiple sets of 2-dimensional image data and corresponding co-registered depth image data; training a first generator of the GAN, with the training data, to develop a set of mapping functions weightings for mapping between sets of 2-dimensional image data and corresponding co-registered depth image data; applying the mapping function weightings, by a second generator of the GAN, to a first set of 2-dimensional image data, to thereby generate synthesized depth data corresponding to the set of 2-dimensional image data; processing the synthesized depth data, by an inverse generator of the GAN, to transform the depth data to a second set of 2-dimensional image data; comparing the first set of 2-dimensiona image data to the second set of 2-dimensional image data and generating an error signal based on the comparison; adjusting the set of mapping function weightings based on the error signal; and repeating the applying, processing comparing and adjusting steps until specified end criterion is satisfied.

Another aspect of the disclosed implementations is non-transient computer-readable media having computer-readable instructions stored thereon which, when executed by a computer processor cause the computer processor to conduct a computer-implemented method for training a neural network which is General Adversarial Network (GAN) to determine mapping function weightings that are optimized for generating synthesized depth image data from 2-dimensional image data, the method comprising: receiving training data, the training data including multiple sets of 2-dimensional image data and corresponding co-registered depth image data; training a first generator of the GAN, with the training data, to develop a set of mapping functions weightings for mapping between sets of 2-dimensional image data and corresponding co-registered depth image data; applying the mapping function weightings, by a second generator of the GAN, to a first set of 2-dimensional image data, to thereby generate synthesized depth data corresponding to the set of 2-dimensional image data; processing the synthesized depth data, by an inverse generator of the GAN, to transform the depth data to a second set of 2-dimensional image data; comparing the first set of 2-dimensiona image data to the second set of 2-dimensional image data and generating an error signal based on the comparison; adjusting the set of mapping function weightings based on the error signal; and repeating the applying, processing comparing and adjusting steps until specified end criterion is satisfied.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

## BRIEF DESCRIPTION OF THE DRAWINGS

FIG. 1 is a schematic diagram of the two modes of the system and method in accordance with one or more implementations.
FIG. 2 is a schematic diagram of the Student Teacher Network in accordance with one or more implementations.
FIG. 3 is a flowchart of a method for determining mapping weightings in accordance with one or more implementations.
FIG. 4 illustrates depth generated by the alternative methods and a disclosed implementation.
FIG. 5 illustrates a t-SNE visualization of the embeddings generated from a ResNet-50 network for RGB images, ground truth depth images, and synthesized depth images generated by the disclosed implementations.
FIG. 6 illustrates synthesized depth generated by disclosed implementations based on various test data sets.

## DETAILED DESCRIPTION

Disclosed implementations include a novel teacher-student adversarial architecture which generates realistic depth images from a single 2-dimensional image, such as a 2-dimensional (RGB for example) image. A student architecture is used to refine the strict latent mapping between 2-dimensional and depth (D) domains learned by the teacher to obtain a more generalizable and less constrained relationship. The synthesized depth can be used to enhance the 2-dimensional data for RGB-D image recognition, such as facial recognition.

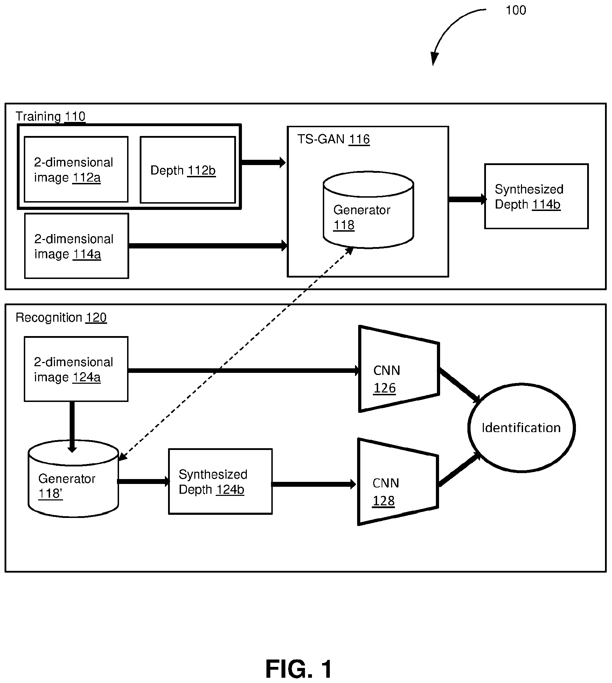

FIG. 1 illustrates the overall framework 100 of a disclosed implementation. In training phase 110, TS-GAN 116 is trained with training data including one or more sets of 2-dimensional image data 112a and corresponding depth data 112b to determine weightings to be used by generator 118 for generating synthesized depth data 114b in response to receipt of 2-dimensional image date 114a in a known manner. In recognition phase 120, 2-dimensional image data 124a is processed by generator 118' to create synthesized depth data 124b. Convolutional Neural Network (CNN) 126 processes the 2-dimensional data 126 and CNN 128 processes the synthesized depth data 124b. The outputs of CNN 126 and CN 128 are fused and applied for identification. Significantly, the generators 118 and 118' are "shared" between a teacher component and a student component as described below.

As noted above, disclosed implementations address the problem of depth generation for RGB images, $P_{target}(Ar)$, with no corresponding depth information, where we are provided RGB-D data which we refer to as a teacher dataset $p_{train}(A_t, B_t)$, with At being RGB images and $B_t$ being the corresponding co-registered depth images. The teacher dataset is used to learn a mapping generator function $G_{A2B}$ that can accurately generate the depth images for target RGB images $A_r$.

As noted above an architecture of TS-GAN, in accordance with disclosed implementations, consists of a teacher component and a student component (also referred to merely as "teacher" and "student" herein). The teacher learns a latent mapping between At and $B_t$. The student then refines the learned mapping for $A_r$ by further training the generator, with another generator-discriminator pair.

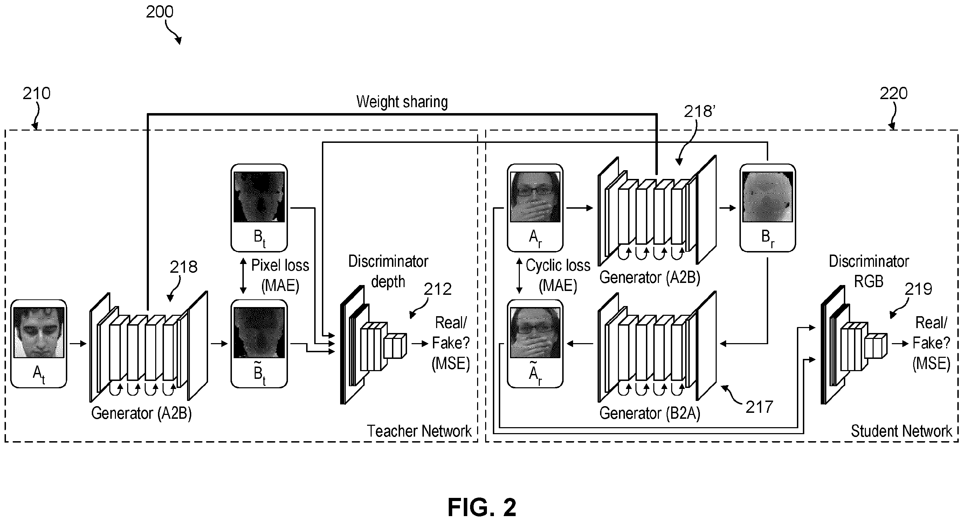

FIG. 2 schematically illustrates a TS-GAN system configuration in accordance with disclosed implementations. TS-GAN system 200 can be implemented by one or more computing devices executing "program modules", i.e. executable code which performs a specified function when executed by a computer processor. System 200 includes teacher 210 and student 220. For the teacher we create a mapping function, $G_{A2B} : A_t \rightarrow B_t$ for generator 218 along with a discriminator 212 $(D_{depth})$. The loss for the mapping function $(\mathcal{L}(G_{A2B}))$ is then formulated as:

$$\mathcal{L}(G_{A2B}) = \frac{1}{2}\mathbb{E}_{A_t \sim p_{data}(A_t)}[(D_{depth}(G_{A2B}(A_t) - 1)^2] \quad (1)$$

where: $\mathbb{E}_{A_t}$ , is a 2-dimensional image sampled from $p_{train}(A_t)$, which is the distribution of 2-dimensional images in the teacher dataset $p_{train}(A_t)$.

The loss for depth discriminator 212 ($\mathcal{L}(D_{depth})$) can be expressed as:

$$\mathcal{L}(D_{depth}) = \frac{1}{2}\mathbb{E}_{B_t \sim p_{data}(B_t)}[(D_{depth}(B_t) - 1)^2] \\ + \frac{1}{2}\mathbb{E}_{A_t \sim p_{gen}(A_t)}[(D_{depth}(G_{A2B}(A_t))^2], \quad (2)$$

where: $\mathbb{E}_{B_t}$ represents a dep image sampled from $p_{train}(B_t)$, which is the distribution of depth images in the teacher dataset.

The additional Euclidean loss $\mathcal{L}_{pixel}$ between the synthesized depth and ground truth depth can be expressed as:

$$\mathcal{L}_{pixel} = (\frac{1}{n})\sum_{i=1}^{n}|B_t - G_{A2B}(A_t)|. \quad (3)$$

The student component aims to convert a single 2-dimensional image, $A_r$, from the 2-dimensional dataset in which no depth information is available, to a target depth image, $B_r$. This is done using the mapping function $G_{A2B}$ (Eq. 1) of generator 218' along with an inverse mapping function, $G_{B2A} : B_r \rightarrow A_r$ of generator 217, and a discriminator 219 ($D_{RGB}$). The loss for the mapping function ($\mathcal{L}(G_{B2A})$) and the discriminator ($\mathcal{L}(D_{RGB})$) is then formulated as:

$$\mathcal{L}(G_{B2A}) = \frac{1}{2}\mathbb{E}_{A_r \sim p_{target}(A_r)}[(D_{RGB}(G_{B2A} \\ (G_{A2B}(A_r)) - 1)^2], \quad (4)$$

where: $\mathbb{E}_{A_r}$ represents a 2-dimensional image sampled from $p_{target}(A_r)$, which is the distribution of a 2-dimensional target data set.

The loss for discriminator 219 ($\mathcal{L}(D_{RGB})$). which discriminates between ground truth 2-dimensional images and the gererated 2-dimensional image is:

$$\mathcal{L}(D_{RGB}) = \frac{1}{2}\mathbb{E}_{A_r \sim p_{target}(A_r)}[(D_{RGB}(A_r) - 1)^2] \\ + \frac{1}{2}\mathbb{E}_{A_r \sim p_{target}(A_r)}[(D_{RGB}(G_{B2A}(G_{A2B}(A_r)))^2]. \quad (5)$$

Inverse generator 217, $G_{B2A}$, inverses the mapping from the synthesized depth back to 2-dimensional data. This is done to preserve the identity of the subject (in the example of the images being images of a person such as facial images) and provide additional supervision in a cyclic-consistent way. Accordingly, the cyclic consistency loss can be expressed as:

$$\mathcal{L}_{cyc} = (\frac{1}{n}) \sum_{i=1}^{n} |A_r - G_{A2B}(G_{B2A}(A_r))| \qquad (6)$$

The total loss for teacher 210 can be summarized as:

$$\mathcal{L}_{teach} = \mathcal{L}(G_{A2B}) + \lambda_{pixel} \cdot \mathcal{L}_{pixel}, \qquad (7)$$

where $\lambda_{pixel}$ is the weighting parameter for the pixel loss $\mathcal{L}_{pixel}$ described in Equation 3 above.

The total loss for student 220, can be summarized as:

$$\mathcal{L}_{student} = \mathcal{L}(G_{A2B}) + \mathcal{L}(G_{B2A}) + \lambda_{cyc} \cdot \mathcal{L}_{cyc}, \qquad (8)$$

where $\lambda_{cyc}$ is the weighting parameter for the cyclic loss $\mathcal{L}_{cyc}$ described in Equation 6 above.

Pseudocode for an example algorithm of operation of system 200 is set forth below.

> **Input** : teacher dataset $p_{train}(A_t, B_t)$, target RGB
> dataset $p_{target}(A_r)$, mapping generator function
> $G_{A2B}$ and $G_{B2A}$, discriminators $D_{RGB}$ and
> $D_{Depth}$, training configurations (loss weights:
> $\lambda_{pixel}, \lambda_{cyc}$; learning rates: $\alpha_{teach}, \alpha_{student}$; total
> epochs: N);
> while *While n <N* do
> > Sample $A_t \sim p_{data}(A_t)$, $B_t \sim p_{data}(B_t)$;
> > Compute loss $L_{teach}(A_t, B_t; G_{A2B}, D_{Depth})$
> > using Eq. 7 and update $G_{A2B}$;
> > Compute loss $L(D_{depth})(A_t, B_t; G_{A2B})$ using
> > Eq.2 and update $D_{Depth}$;
> > Sample $A_r \sim p_{target}(A_r)$;
> > Compute loss $L_{student}(A_r; G_{A2B}, G_{B2A}, D_{RGB})$ using Eq. 8 and update $G_{A2B}$ and
> > $G_{B2A}$;
> > Compute loss $L(D_{RGB})(A_r; G_{A2B}, G_{B2A})$
> > using Eq.5 and update $D_{RGB}$;
> > if *n >epoch decay teacher* then
> > | $\alpha_{teach} *$ decay rate;
> > else
> > | continue;

As laid out in Algorithm 1, a 2-dimensional image is sampled, *At,* from $p_{train}(A_t)$ as input to generator 218. The output of generator 218 is the corresponding depth image, which is fed to discriminator 212 to be classified, as real or fake for example. Discriminator 212 is also trained with $B_t$ as well as generated depth images $B_t$, using the loss described in Equation. 2. Apart from the adversarial loss, the training is facilitated with the help of pixel loss (Equation 3), in the form of Euclidean loss, for which a weighting parameter $\lambda_{pixel}$ is defined. After training teacher 210, a 2-dimensional image, $A_r$, is sampled from the target 2-dimensional data, $p_{target}(A_r)$, which is fed to generator 218' that is "shared" between the student and the teacher. In other words, generators 218 and 218' are functionally equivalent, by sharing weightings or by being the same instance of a generator, for example. The depth images generated by generator 218' are fed to discriminator 212 in the teacher network stream, thus providing a signal to generate realistic depth images. The synthesized depth image is also fed to the inverse generator 217 to transform the depth back to 2-dimensional using the loss expressed by Equation. 6. As noted above, this preserves identity information in the depth image while allowing for a more generalized mapping between 2-dimensional and depth to be learned through refinement of the original latent 2-dimensional-to-3D mapping. Discriminator 219, which can also follow a fully convolutional structure, is employed to provide an additional signal for the inverse generator to create realistic 2-dimensional images.

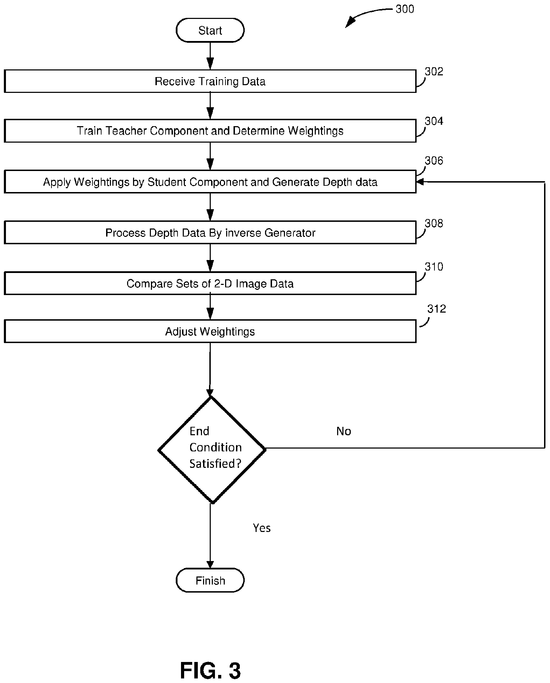

FIG. 3 is a flow chart of a method 300 in accordance with disclosed implementations. At 302, training data is received. The training data includes multiple sets of 2-dimensional image data and corresponding co-registered depth image data. At 304, the teacher component is trained, with the training data, to develop a set of mapping functions weightings for mapping between sets of 2-dimensional image data and corresponding co-registered depth image data and which can be applied to the student generator. At step 306, the mapping function weightings are applied, by the student generator, to a first set of 2-dimensional image data, to thereby generate synthesized depth data corresponding to the set of 2-dimensional image data. At 308, the synthesized depth data is processed, by the student inverse generator, to transform the depth data to a second set of 2-dimensional image data. At 310, the first set of 2-dimensional image data is compared to the second set of 2-dimensional image data and an error signal is generated based on the comparison. At 312, the set of mapping function weightings based on the error signal can be adjusted and, optionally, steps 306 - 312 can be repeated until the error represented by the error signal is less than a predetermined amount or any other end condition is satisfied. For example, the end condition can be a predetermined number of iterations or the like.

An example of specific implementation details is disclosed below. A fully convolutional structure can be used for the generator inspired, where an input image of size $128 \times 128 \times 3$ is used to output a depth image with the same dimensions, as summarized in Table 1 below.

Table 1:

| Module | Layer | Parameters |
|---|---|---|
| Residual block | Input | $32 \times 32 \times 256$ |
| | Conv2d | Kernel $3 \times 3$, Feat. maps 256 |
| | | Stride 2, InstanceNorm, ReLU |
| | Conv2d | Kernel $3 \times 3$, Feat. maps 256 |
| | | Stride 2, InstanceNorm, ReLU |
| | Add (with input) | $32 \times 32 \times 256$ |
| Generator | Image input | $128 \times 128 \times 3$ |
| | Conv2d | Kernel $7 \times 7$, Feat. maps 64 |
| | | Stride 1, InstanceNorm, ReLU |
| | Conv2d | Kernel $3 \times 3$, Feat. maps 128 |
| | | Stride 2, InstanceNorm, ReLU |
| | Conv2d | Kernel $3 \times 3$, Feat. maps 256 |
| | | Stride 2, InstanceNorm, ReLU |
| | Residual block $\times$ 6 | Kernel $3 \times 3$, Feat. maps 256 |
| | | Stride 2, InstanceNorm, ReLU |
| | Conv2dTrans | Kernel $3 \times 3$, Feat. maps 128 |
| | | Stride 2, InstanceNorm, ReLU |
| | Conv2dTrans | Kernel $3 \times 3$, Feat. maps 64 |
| | | Stride 2, InstanceNorm, ReLU |
| | Conv2dTrans | Kernel $7 \times 7$, Feat maps 3 |
| | | Stride 1, InstanceNorm, tanh |
| | Image out | $128 \times 128 \times 3$ |

(continued)

| Module | Layer | Parameters |
|---|---|---|
| Discriminator | Image input | $128 \times 128 \times 3$ |
| | Conv2d | Kernel $4 \times 4$, Feat maps 64 |
| | | Stride 2, InstanceNorm, LeakyReLU |
| | Conv2d | Kernel $4 \times 4$, Feat. maps 128 |
| | | Stride 2, InstanceNorm, LeakyReLU |
| | Conv2d | Kernel $4 \times 4$, Feat. maps 256 |
| | | Stride 2, InstanceNorm, LeakyReLU |
| | Conv2d | Kernel $4 \times 4$, Feat, maps 256 |
| | | Stride 2, InstanceNorm, LeakyReLU |
| | Conv2d | Kernel $4 \times 4$, Feat. maps 1 |
| | | Stride 1, InstanceNorm, LeakyReLU |
| | Discriminator Logits | $16 \times 16 \times 1$ |

The encoder part of the generator contains three convolution layers with ReLU activation, where the number of feature maps is gradually increased (64, 128, 256) with a kernel size of $7 \times 7$ and a stride of 1 for the first layer. Subsequent layers use a kernel size of $3 \times 3$ and a stride of 2 . This is followed by 6 residual blocks, consisting of 2 convolution layers, each with a kernel size of $3 \times 3$ and a stride of 2 and 256 feature maps as described in Table 1. The final decoder part of the generator follows a similar structure, with the exception of using de-convolution layers for upsampling instead of convolution, with decreasing feature maps (128, 64, 3). The last de-convolution layer which is used to map the features back to images uses a kernel size of $7 \times 7$ and a stride of 1, the same as the first layer of the encoder, but with a tanh activation.

A fully convolutional architecture can be used for the discriminator, with an input of size $128 \times 128 \times 3$. The network uses 4 convolution layers, where the number of filters are gradually increased (64, 128, 256, 256), with a fixed kernel of $4 \times 4$ and a stride of 2. All the convolution layers use Instance normalization and leaky ReLU activations with a slope of 0.2. The final convolution layer uses the same parameters, with the exception of using only 1 feature map.

For stabilizing the model, the discriminators can be updated using images from a buffer pool of, for example, 50 generated images rather than the ones immediately produced by the generators. The network can be trained from scratch on an Nvidia GTX 2080Ti GPU, using TensorFlow 2.2. Adam optimizer and a batch size of 1 can be used. Additionally, two different learning rates of 0.0002 and 0.000002 can be used for the teacher and student components respectively. The learning can start decaying for the teacher on the 25th epoch with a decay rate 0.5, sooner than the student, where the learning rate decay can start after the 50th epoch. The weights $\lambda_{cyc}$ and $\lambda_{pixel}$ can be empirically determined to be 5 and 10, respectively.

Further, there are several well-known data sets that can be used for training. For example, the CurtinFaces, IIIT-D RGB-D, EURECOM KinectFaceDb, or Labeled Faces in-the-wild (LFW) data sets can be used. In the training phase of the research example, the entire CurtinFaces dataset was used to train the teacher in order to learn a strict latent mapping between RGB and depth. RGB and ground-truth depth images of this dataset were used as $A_t$ and $\underline{B}_t$ respectively.

To train the student, we used the training subsets of the RGB images from IIIT-D RGB-D and EURECOM KinectFaceDb. IIIT-D TGB-D has a predefined protocol with a fivefold cross-validation strategy, which was strictly adhered to. For EURECOM KinectFaceDb, the data was divided in a 50-50 split between the training and testing sets, resulting in a total of 468 images in each set. In the case of the in-the-wild LFW RGB dataset, the whole dataset was used, setting aside 20 images from each of the 62 subjects for recognition experiments, amounting to 11,953 images.

For the testing phase, the trained generator was used to generate the hallucinated depth images for each RGB image available in the testing sets. then the RGB and depth images were used for training various recognition networks. For RGB-D datasets, we trained the recognition networks on the training sets using the RGB and hallucinated depth images and evaluated the performance on the testing sets. Concerning the LFW dataset, in the testing phase, we used the remaining 20 images from each of the 62 identities that are not used for training. We then used the output RGB and hallucinated depth images as inputs for the recognition experiment.

First, the quality of depth image generation was verified against other generators using pixel-wise quality assessment metrics. These metrics include pixel-wise absolute difference, L1 norm, L2 norm and Root Mean Squared Error (RMSE), with the aim of assessing the quality of the hallucinated depth by comparing them to the original co-registered ground depths. Also, a threshold metrics equation ($\delta$) (Eq. 9), which measures the percentage of pixels under a certain error threshold was applied to provide a similarity score. The equation for this metric is expressed as follows:

$$\% \text{ of } y_i \text{ s.t. } \max\left(\frac{y_i}{y_i^*}, \frac{y_i^*}{y_i}\right) = \delta < val., \qquad (9)$$

where $y_i$ and $y_i^*$, respectively represent pixel values in ground truths and hallucinated depths, and *val* denotes the threshold error value which was set to 1.25.

The aim of the study was to use the hallucinated modality to boost recognition performance. As we wanted to present results with no dependency on a specific recognition architecture, we used a diverse set of standard deep networks, notably VGG-16, inception-v2, ResNet-50, and SE-ResNet-50, in the evaluation. The rank-1 identification results were reported with and without ground truth depth for RGB-D datasets as well as the results obtained by the combination of RGB and the hallucinated depth images. For LFW RGB datasets, we naturally did not have ground truth depths, so only the identification results were presented with and without the hallucinated depth. Also, different strategies were used, including feature-level fusion, score-level fusion, two-level attention fusion, and depth-guided attention, when combining RGB and depth images.

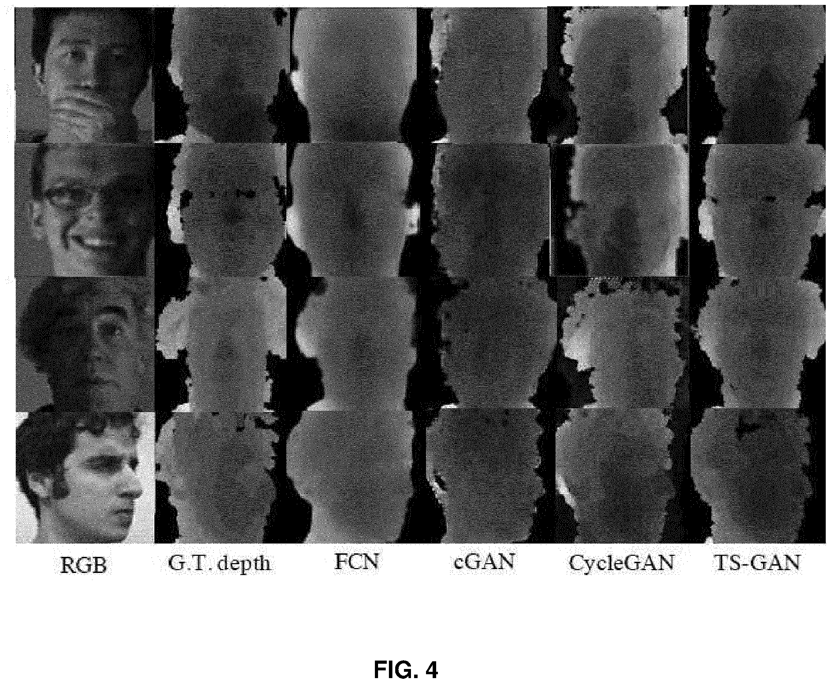

For quality assessment, the performance of TS-GAN was compared to alternative depth generators, namely Fully Convolutional Network (FCN), image-to-image translation cGAN, and CycleGAN. Experiments were performed on the CurtinFaces dataset, where 47 out of the 52 subjects were used for training the generator, and the remaining 5 subjects were used for generating depth images to be used for quality assessment experiments. FIG. 4 shows depth generated by the alternative methods as well as the TS-GAN implementation. It can be seen that the methods disclosed herein are able to generate realistic depth images which are very similar to the ground truth depth images.

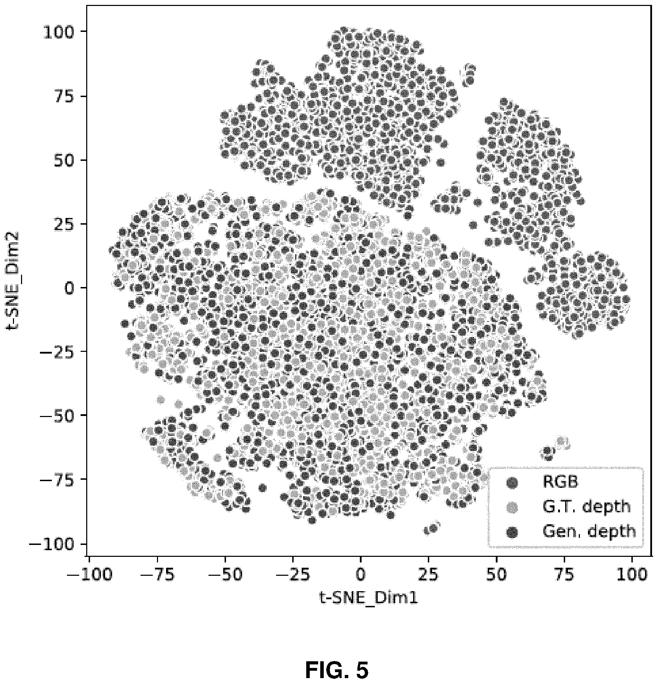

FIG. 5 shows a t-SNE visualization of the embeddings generated from a ResNet-50 network for RGB images, ground truth depth images, and hallucinated depth images by the disclosed methods. This visualization demonstrates a very high overlap between the ground truth and generated depth images, thus depicting their similarity.

Table 2 shows the results for pixel-wise objective metrics.

Table 2:

| Metrics | FCN [4] | cGAN [34] | CycleGAN [24] | Ours (TS-GAN) |
|---|---|---|---|---|
| Abs. Diff. ↓ | **0.0712** | 0.0903 | 0.1037 | 0.0754 |
| L1 Norm ↓ | 0.2248 | 0.2201 | 0.2387 | **0.2050** |
| L2 Norm ↓ | 89.12 | 89.05 | 90.32 | **82.54** |
| RMSE ↓ | 0.3475 | 0.3474 | 0.3542 | **0.3234** |
| $\delta(1.25)$ ↑ | 64.31 | 64.27 | $\delta$5.76 | **69.02** |
| $\delta(1.25^2)$ ↑ | 81.66 | 82.08 | 82.56 | **87.20** |
| $\delta(1.25^3)$ ↑ | 94.33 | 95.10 | 95.63 | **97.54** |

For the first four metrics including absolute difference, L1 Norm, L2 Norm, and RMSE, lower values indicate better image quality. It can be observed that the method disclosed herein consistently outperforms the other methods. The only exception is the absolute difference metric in which FCN shows slightly better performance. A potential reason for this observation is that FCN only uses one loss function that aims to minimize the absolute error between the ground truth and the generated depth, naturally resulting in minimal absolute difference error. For the threshold metric $\delta$, higher percentage of pixels under the threshold error value of 1.25 represents better spatial accuracy for the image. The method disclosed herein achieves considerably better accuracy than other generators in terms of these metrics.

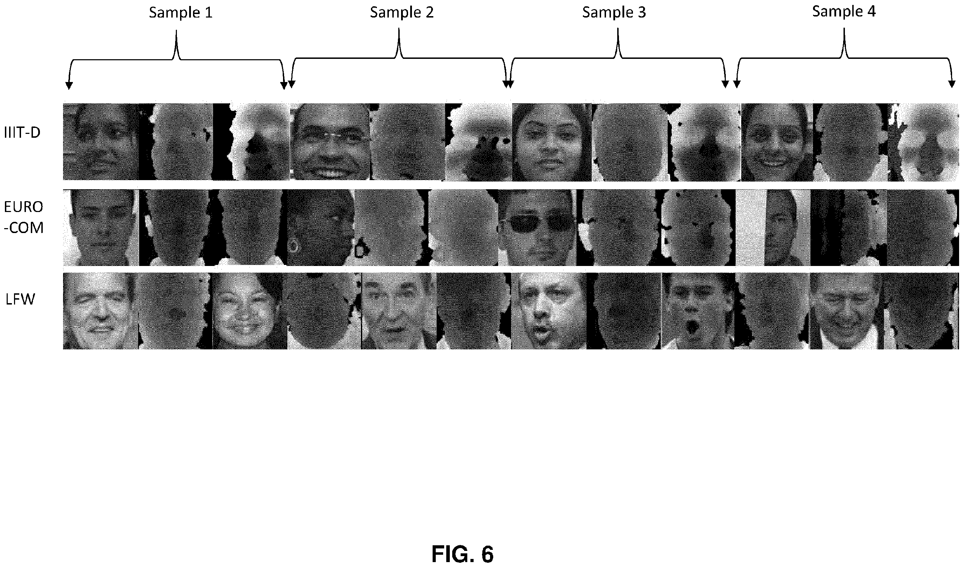

In order to show the generalization of the generator when applied to the other datasets for testing, resulting hallucinated depth samples for IIIT-D and EURECOM RGB-D datasets are shown in FIG. 6 (top and middle rows) . In FIG. 6, for each of the four samples, the first and second columns show the input RGB images and the generated depth images, while the third column shows the ground truth depth image corresponding to the RGB image. As can be seen, the disclosed methods can adapt to different poses, expressions and occlusions present in the target datasets. The bottom row in this figure shows the depth generated for the in-the-wild LFW RGB dataset, where the disclosed method is able to adapt to the non-frontal and unnatural poses which are not present in the constrained, lab-acquired RGB-D datasets.

As noted above, rank-1 face identification results were used to demonstrate the effectiveness of the hallucinated depth for face recognition. In this context, the mapping function (Equation 1) was used to extract the corresponding depth image from the RGB image to be used as inputs to the recognition pipeline. Table 3 below shows the recognition results on the IIIT-D and KinectFaceDb datasets using the four networks discussed earlier.

| Model | Input | Fusion | IIIT-D Acc. | EURECOM Acc. |
|---|---|---|---|---|
| VGG-16 | RGB | - | 94.1% | 83.6% |
| | RGB + D | Feat.<br>Score | 95.4%<br>94.4% | 88.4%<br>84.5% |
| | RGB + D̃ | Feat.<br>Score | 95.4%<br>94.1% | 88.3%<br>84.2% |
| Inception-v2 | RGB | | 95.0% | 87.5% |
| | RGB + D | Feat.<br>Score | 96.5%<br>95.0% | 90.3%<br>86.9% |
| | RGB + D̃ | Feat.<br>Score | 96.1%<br>95.9% | 90.1%<br>87.9% |
| ResNet-50 | RGB | - | 95.8% | 90.8% |
| | RGB + D | Feat.<br>Score | 96.9%<br>95.9% | 92.1%<br>91.0% |
| | RGB + D̃ | Feat.<br>Score | 97.1%<br>96.1% | 92.2%<br>90.7% |
| SE-ResNet-50 | RGB | - | 97.8% | 91.3% |
| | RGB + D | Feat.<br>Score | 98.9%<br>97.9% | 93.1%<br>91.6% |
| | RGB + D̃ | Feat.<br>Score | 98.6%<br>97.5% | 93.2%<br>91.5% |
| Two-level att. | RGB + D̃<br>RGB + D̃ | Feat.*<br>Feat.* | 99.4%<br>99.1% | 92.0%<br>92.3% |
| Depth-guided att. | RGB + D<br>RGB + D̃ | Feat. *<br>Feat.* | 99.7%<br>99.7% | 93.1%<br>92.7% |

It can be observed that the fusion of RGB and the depth hallucinated using the disclosed TS-GAN consistently provides better results across all the CNN architectures, when compared to using solely the RGB images. For reference, recognition with RGB and the ground truth depth was also performed.

For the IIIT-D dataset, recognition with RGB and generated depth lead to comparable results to that with RGB and ground truth depth images. Concerning the EURECOM KinectFaceDb dataset, the results also show that the depth generated by the disclosed methods provide added value to the recognition pipeline as competitive results (slightly below) to that of RGB and ground truth depth are achieved. Interestingly, in some cases for both IIIT-D and KinectFaceDb, the hallucinated depths provided superior performance over the ground-truth depths. This is most likely due to the fact that some depth images available in the IIIT-D and KinectFaceDb datasets are noisy, while the disclosed generator can provide cleaner synthetic depth images as it has been trained on higher quality depth images available in the CurtinFaces dataset.

Table 4 below presents the recognition results on the in-the-wild LFW dataset, where the results are presented with and without our hallucinated depth images. It can be observed that the hallucinated depth generated by the disclosed examples significantly improves the recognition accuracy across all the CNN architectures, with 3.4%, 2.4%, 2.3%, 2.4% improvements for VGG-16, Inception-v2, ResNet-50, and SE-ResNet-50 respectively. The improvements are more obvious when considering the state-of-the-art attention-based methods, clearly indicating the benefits of our synthetic depth images to improve recognition accuracy.

Table 4:

| Model | Input | Fusion | Accuracy |
|---|---|---|---|
| VGG-16 | RGB | - | 75.3% |
| | RGB + $\tilde{D}$ | Feat. Score | 78.7% 76.1% |
| Inception-v2 | RGB | - | 78.1% |
| | RGB + D | Feat. Score | 80.5% 78.4% |
| ResNet-50 | RGB | - | 81.8% |
| | RGB + $\tilde{D}$ | Feat. Score | 84.1% 81.7% |
| SE-ResNet-50 | RGB | - | 83.2% |
| | RGB + is | Feat. Score | 85.6% 83.2% |
| **Two-level** att. [43] | RGB + $\tilde{D}$ | Feat.* | 84.7% |
| Depth-guided att. [44] | RGB + $\tilde{D}$ | Feat.* | 85.9% |

To evaluate the impact of each of the main components of the disclosed solution, ablation studies were performed by systematically removing the components. First, we removed the student component, resulting in the teacher. Next, we removed the discriminator from the teacher leaving only the A2B generator as discussed above. The results are presented in Table 5 and compared to our complete TSGAN solution. The presented recognition results are obtained using feature-level fusion scheme to combine RGB and hallucinated depth images. The results show that performance suffers by the removal of each component for all four CNN architectures, demonstrating the effectiveness of the disclosed approach.

Table 5:

| Ablation Model | Classifier | IIIT-D Accuracy | KinectFaceDb Accuracy |
|---|---|---|---|
| Teacher | VGG-16 | 95.4% | 85.7% |
| | Inception-v2 | 95.0% | 88.6% |
| | ResNet-50 | 96.6% | 91.3% |
| | SE-ResNet-50 | 98.4% | 91.9% |
| Teacher's A2B Gen. | VGG-16 | 95.1% | 87.8% |
| | Inception-v2 | 96.0% | 88.2% |
| | ResNet-50 | 96.7% | 90.6% |
| | SE-ResNet-50 | 98.5% | 92.2% |
| Teacher-Student (TS-GAN) | VGG-16 | 95.4% | 88.3% |
| | Inception-v2 | **96.1%** | **90.1%** |
| | ResNet-50 | **97.1%** | **92.2%** |
| | SE-ResNet-50 | 98.6% | 93.2% |

The disclosed implementations teach a novel teacher-student adversarial architecture for depth generation from 2-dimensional images, such as RGB images. The disclosed implementations boost the performance of object recognition systems, such as facial recognition systems. The teacher component consisting of a generator and a discriminator learns a strict latent mapping between 2-dimensional data and depth image pairs following a supervised approach. The student, which itself consists of a generator-discriminator pair along with the generator shared with the teacher, then refines this mapping by learning a more generalized relationship between the 2-dimensional and depth domains for samples without corresponding co-registered depth images. Comprehensive experiments on three public face datasets show that the disclosed method and system outperformed other depth generation methods, both in terms of depth quality and face recognition performance.

The disclosed implementations can be implemented by various computing devices programmed with software and/or firmware to provide the disclosed functions and modules of executable code implemented by hardware. The software and/or firmware can be stored as executable code on one or more non-transient computer-readable media. The computing devices may be operatively linked via one or more electronic communication links. For example, such electronic communication links may be established, at least in part, via a network such as the Internet and/or other networks.

A given computing device may include one or more processors configured to execute computer program modules. The computer program modules may be configured to enable an expert or user associated with the given computing platform to interface with the system and/or external resources. By way of non-limiting example, the given computing platform may include one or more of a server, a desktop computer, a laptop computer, a handheld computer, a tablet computing platform, a Smartphone, a gaming console, and/or other computing platforms.

The various data and code can be stored in electronic storage devices which may comprise non-transitory storage media that electronically stores information. The electronic storage media of the electronic storage may include one or both of system storage that is provided integrally (i.e., substantially non-removable) with the computing devices and/or removable storage that is removably connectable to the computing devices via, for example, a port (e.g., a USB port, a firewire port, etc.) or a drive (e.g., a disk drive, etc.). The electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media.

Processor(s) of the computing devices may be configured to provide information processing capabilities and may include one or more of a digital processor, an analog processor, a digital circuit designed to process information, an analog circuit designed to process information, a state machine, and/or other mechanisms for electronically processing information. As used herein, the term "module" may refer to any component or set of components that perform the functionality attributed to the module. This may include one or more physical processors during execution of processor readable instructions, the processor readable instructions, circuitry, hardware, storage media, or any other components.

**Claims**

1. A computer-implemented method for training a neural network which is General Adversarial Network (GAN) to determine mapping function weightings that are optimized for generating synthesized depth image data from 2-dimensional image data, the method comprising:

   receiving (302) training data, the training data including at least one set of 2-dimensional image data and corresponding co-registered depth image data;
   training (304) a first generator of the GAN, with the training data, to develop a set of mapping functions weightings for mapping between sets of 2-dimensional image data and corresponding co-registered depth image data;
   applying (306) the mapping function weightings, by a second generator of the GAN, to a first set of 2-dimensional image data, to thereby generate synthesized depth data corresponding to the set of 2-dimensional image data;
   processing (308) the synthesized depth data, by an inverse generator of the GAN, to transform the depth data to a second set of 2-dimensional image data;
   comparing (310) the first set of 2-dimensional image data to the second set of 2-dimensional image data and generating an error signal based on the comparison;
   adjusting (312) the set of mapping function weightings based on the error signal; and
   repeating the applying (306), processing (308), comparing (310) and adjusting (312) steps until specified end criterion is satisfied.

2. The method of claim 1, wherein the neural network is a Teacher Student Generative Adversarial Network (TS-GAN) the TS-GAN including a teacher component consisting of the first generator as a teacher generator and a teacher discriminator, the TS-GAN also including a student component consisting of the second generator as a student generator, a student inverse generator, and a student discriminator, the student generator sharing a common set of weightings with the teacher generator.

3. The method of claim 1 or claim 2, wherein the first generator and the second generator are implemented as the same instance of a generator.

4. The method of claim 2, wherein the teacher generator and the student generator are implemented as separate

EP 4 060 560 B1

instances of a generator that have the same set of mapping function weightings.

5. The method of any preceding claim, wherein the 2-dimensional image data is RGB image data.

6. The method of any one of claims 1-5, wherein the 2-dimensional image data is facial data representing a face of a person.

7. The method of any one of claims 1-5, wherein the 2-dimensional image data represents at least one of objects, vehicles, or machines on a roadway.

8. The method of any preceding claim, further comprising using the 2-dimensional image data and synthesized depth data for image recognition.

9. The method of any preceding claim, wherein the 2-dimensional image data and depth data are stored in a single file.

10. The method of claim 2 or any one of claims 3-9 when dependent on claim 2, wherein a loss of the teacher discriminator is determined based on the following equation:

$$\mathcal{L}(D_{depth}) = \frac{1}{2}\mathbb{E}_{B_t \sim p_{data}(B_t)}[(D_{depth}(B_t) - 1)^2]$$
$$+ \frac{1}{2}\mathbb{E}_{A_t \sim p_{gen}(A_t)}[(D_{depth}(G_{A2B}(A_t))^2],$$

where:

$\cdot\mathbb{E}_{B_t}$ represents a depth image sampled from training data $p_{train}(A_t, B_t)$;

At represents a set of 2-dimensional image data;

$B_t$ represents depth data corresponding to $A_t$; and

$G_{A2B}$ is the mapping function.

11. The method of claim 2 or any one of claims 3-10 when dependent on claim 2, wherein a Euclidean loss of the teacher discriminator is determined based on the following equation:

$$\mathcal{L}_{pixel} = \left(\frac{1}{n}\right) \sum_{i=1}^{n} |B_t - G_{A2B}(A_t)|$$

.

12. The method of claim 2 or any one of claims 3-11 when dependent on claim 2, wherein a loss of the student discriminator is determined based on the following equation:

$$\mathcal{L}(D_{RGB}) = \frac{1}{2}\mathbb{E}_{A_r \sim p_{target}(A_r)}[(D_{RGB}(A_r) - 1)^2]$$
$$+ \frac{1}{2}\mathbb{E}_{A_r \sim p_{target}(A_r)}[(D_{RGB}(G_{B2A}(G_{A2B}(A_r)))^2].$$

where:

Ptarget(Ar) represents the distribution of a 2-dimensional target data set;

$\mathbb{E}_{A_r}$ represents an image sampled from $p_{target}(A_r)$;

$G_{A2B}$ is the mapping function; and

$G_{B2A}$ is the inverse mapping function.

13. The method of claim 2 or any one of claims 3-12 when dependent on claim 2, wherein at least one of the teacher generator, the student generator, and the student inverse generator comprise a convolutional neural network.

14. The method of claim 13, wherein the 2-dimensional image data and the synthesized depth data is of the size 128 $\times$ 128 $\times$ 3, and wherein an encoder portion of the student generator and an encoder portion of the teacher generator include the following structure:

> 3 convolution layers applying a rectified linear activation function (ReLU);
> a quantity of feature maps is gradually increased from 64 to 128 to 256 with a kernel size of 7 $\times$ 7 and a stride of 1 for the first layer; and
> subsequent layers use a kernel size of 3 $\times$ 3 and a stride of 2 followed by 6 residual blocks, consisting 2 convolution layers each with a kernel size of 3 $\times$ 3 and a stride of 2; and
> wherein a final decoder portion of the generator includes the following structure:

> 3 de-convolution layers for up-sampling applying a rectified linear activation function (ReLU);
> a quantity of feature maps is gradually decreased from 128 to 64 to 3; and
> a last de-convolution layer, which is used to map the features back to images, uses a kernel size of 7 $\times$ 7 and a stride of 1, with a tanh activation function.

15. The method of any preceding claim, where there are multiple iterations of the receiving, training, applying, processing, and adjusting steps.

16. A computing system configured to train a neural network which is General Adversarial Network (GAN) to determine mapping function weightings that are optimized for generating synthesized depth image data from 2-dimensional image data, the system comprising:

> at least one hardware computer processor operative to execute computer-readable instructions; and
> at least one non-transient memory device storing computer executable instructions thereon, which when executed by the at least one hardware computer processor, cause the at least one hardware computer processor to conduct the method of any preceding claim.

17. Non-transient computer-readable media having computer-readable instructions stored thereon which, when executed by a computer processor cause the computer processor to conduct the method of any one of claims 1-15.

**Patentansprüche**

1. Computerimplementiertes Verfahren zum Trainieren eines neuronalen Netzwerks, welches ein General Adversarial Network (GAN) ist, um Abbildungsfunktionsgewichtungen zu bestimmen, welche für ein Generieren von synthetisierten Tiefenbilddaten aus 2-dimensionalen Bilddaten optimiert werden, wobei das Verfahren umfasst:

> Empfangen (302) von Trainingsdaten, wobei die Trainingsdaten wenigstens einen Satz von 2-dimensionalen Bilddaten und entsprechende mitregistrierte Tiefenbilddaten umfassen;
> Trainieren (304) eines ersten Generators des GAN mit den Trainingsdaten, um einen Satz von Abbildungsfunktionsgewichtungen zum Abbilden zwischen Sätzen von 2-dimensionalen Bilddaten und entsprechenden mitregistrierten Tiefenbilddaten zu entwickeln;
> Anwenden (306) der Abbildungsfunktionsgewichtungen durch einen zweiten Generator des GAN auf einen ersten Satz von 2-dimensionalen Bilddaten, um dadurch synthetisierte Tiefendaten entsprechend dem Satz von 2-dimensionalen Bilddaten zu generieren;
> Verarbeiten (308) der synthetisierten Tiefendaten durch einen inversen Generator des GAN, um die Tiefendaten in einen zweiten Satz von 2-dimensionalen Bilddaten umzuwandeln;
> Vergleichen (310) des ersten Satzes von 2-dimensionalen Bilddaten mit dem zweiten Satz von 2-dimensionalen Bilddaten und Generieren eines Fehlersignals auf Grundlage des Vergleichs;
> Anpassen (312) des Satzes von Abbildungsfunktionsgewichtungen auf Grundlage des Fehlersignals; und
> Wiederholen der Schritte Anwenden (306), Verarbeiten (308), Vergleichen (310) und Anpassen (312), bis ein spezifiziertes Endkriterium erfüllt ist.

2. Verfahren nach Anspruch 1, wobei das neuronale Netzwerk ein Teacher Student Generative Adversarial Network (TS-GAN) ist, wobei das TS-GAN eine Lehrer-Komponente umfasst, welche aus dem ersten Generator als ein Lehrer-Generator und einem Lehrer-Diskriminator besteht, wobei das TS-GAN auch eine Schüler-Komponente umfasst, welche aus dem zweiten Generator als ein Schüler-Generator, einem inversen Schüler-Generator und einem Schüler-Diskriminator besteht, wobei der Schüler-Generator einen gemeinsamen Satz von Gewichtungen mit dem Lehrer-Generator teilt.

3.  Verfahren nach Anspruch 1 oder Anspruch 2, wobei der erste Generator und der zweite Generator als die gleiche Instanz eines Generators implementiert werden.

4.  Verfahren nach Anspruch 2, wobei der Lehrer-Generator und der Schüler-Generator als separate Instanzen eines Generators implementiert werden, welche den gleichen Satz von Abbildungsfunktionsgewichtungen aufweisen.

5.  Verfahren nach jeglichem vorhergehenden Anspruch, wobei die 2-dimensionalen Bilddaten RGB-Bilddaten sind.

6.  Verfahren nach jeglichem der Ansprüche 1-5, wobei die 2-dimensionalen Bilddaten Gesichtsdaten sind, welche ein Gesicht einer Person darstellen.

7.  Verfahren nach jeglichem der Ansprüche 1-5, wobei die 2-dimensionalen Bilddaten wenigstens eines aus Objekten, Fahrzeugen oder Maschinen auf einer Straße darstellen.

8.  Verfahren nach jeglichem vorhergehenden Anspruch, ferner umfassend ein Verwenden der 2-dimensionalen Bilddaten und der synthetisierten Tiefendaten für eine Bilderkennung.

9.  Verfahren nach jeglichem vorhergehenden Anspruch, wobei die 2-dimensionalen Bilddaten und die Tiefendaten in einer einzelnen Datei gespeichert werden.

10. Verfahren nach Anspruch 2 oder jeglichem der Ansprüche 3-9, wenn abhängig von Anspruch 2, wobei ein Verlust des Lehrer-Diskriminators auf Grundlage der folgenden Gleichung bestimmt wird:

$$L\big(D_{depth}\big) = \frac{1}{2}\,\mathbb{E}_{B_t \sim p_{data}(B_t)}\left[\big(D_{depth}(B_t) - 1\big)^2\right] + \frac{1}{2}\,\mathbb{E}_{A_t \sim p_{gen}(A_t)}\left[\left(D_{depth}\big(G_{A2B}(A_t)\big)\right)^2\right],$$

wobei:

$\mathbb{E}_{B_t}$ ein aus Trainingsdaten $p_{train}(A_t, B_t)$ gesampeltes Tiefenbild darstellt;
$A_t$ einen Satz von 2-dimensionalen Bilddaten darstellt;
$B_t$ Tiefendaten entsprechend $A_t$ darstellt; und
$G_{A2B}$ die Abbildungsfunktion ist.

11. Verfahren nach Anspruch 2 oder jeglichem der Ansprüche 3-10, wenn abhängig von Anspruch 2, wobei ein euklidischer Verlust des Lehrer-Diskriminators auf Grundlage der folgenden Gleichung bestimmt wird:

$$L_{pixel} = \left(\frac{1}{n}\right)\sum_{i=1}^{n} |B_t - G_{A2B}(A_t)|.$$

12. Verfahren nach Anspruch 2 oder jeglichem der Ansprüche 3-11, wenn abhängig von Anspruch 2, wobei ein Verlust des Schüler-Diskriminators auf Grundlage der folgenden Gleichung bestimmt wird:

$$L(D_{RGB}) = \frac{1}{2}\,\mathbb{E}_{A_r \sim p_{target}(A_r)}[(D_{RGB}(A_r) - 1)^2] +$$

$$\frac{1}{2}\,\mathbb{E}_{A_r \sim p_{target}(A_r)}\left[\left(D_{RGB}\big(G_{B2A}\big(G_{A2B}(A_r)\big)\big)\right)^2\right],$$

wobei:

$p_{target}(A_r)$ die Verteilung eines 2-dimensionalen Zieldatensatzes darstellt;

$\mathbb{E}_{A_r}$ ein aus $p_{target}(A_r)$ gesampeltes Bild darstellt;

$G_{A2B}$ die Abbildungsfunktion ist; und

$G_{B2A}$ die inverse Abbildungsfunktion ist

13. Verfahren nach Anspruch 2 oder jeglichem der Ansprüche 3-12, wenn abhängig von Anspruch 2, wobei wenigstens einer aus dem Lehrer-Generator, dem Schüler-Generator und dem inversen Schüler-Generator ein faltendes neuronales Netzwerk umfasst.

14. Verfahren nach Anspruch 13, wobei die 2-dimensionalen Bilddaten und die synthetisierten Tiefendaten von der Größe $128 \times 128 \times 3$ sind und wobei ein Encoder-Abschnitt des Schüler-Generators und ein Encoder-Abschnitt des Lehrer-Generators die folgende Struktur umfassen:

3 Faltungsschichten, welche eine berichtigte lineare Aktivierungsfunktion (ReLU) anwenden;
eine Quantität von Merkmalsabbildungen wird graduell von 64 auf 128 auf 256 mit einer Korngröße von $7 \times 7$ und einer Schrittweite von 1 für die erste Schicht erhöht; und
nachfolgende Schichten verwenden eine Korngröße von $3 \times 3$ und eine Schrittweite von 2, gefolgt von 6 Restblöcken, welche aus 2 Faltungsschichten jeweils mit einer Korngröße von $3 \times 3$ und einer Schrittweite von 2 bestehen; und
wobei ein finaler Decoder-Abschnitt des Generators die folgende Struktur umfasst:

3 Entfaltungsschichten zum Up-Sampling, welche eine berichtigte lineare Aktivierungsfunktion (ReLU) anwenden;
eine Quantität von Merkmalsabbildungen wird graduell von 128 auf 64 auf 3 verringert; und
eine letzte Entfaltungsschicht, welche verwendet wird, um die Merkmale zurück zu Bildern abzubilden, verwendet eine Korngröße von $7 \times 7$ und eine Schrittweite von 1, mit einer tanh-Aktivierungsfunktion.

15. Verfahren nach jeglichem vorhergehenden Anspruch, wobei es mehrere Iterationen der Schritte Empfangen, Trainieren, Anwenden, Verarbeiten und Anpassen gibt.

16. Rechensystem, welches dazu eingerichtet ist, ein neuronales Netzwerk zu trainieren, welches ein General Adversarial Network (GAN) ist, um Abbildungsfunktionsgewichtungen zu bestimmen, welche für ein Generieren von synthetisierten Tiefenbilddaten aus 2-dimensionalen Bilddaten optimiert sind, wobei das System umfasst:

wenigstens einen Hardwarecomputerprozessor, welcher betriebsfähig ist, um computerlesbare Anweisungen auszuführen; und
wenigstens eine nicht-flüchtige Speichervorrichtung, welche computerausführbare Anweisungen darauf speichert, welche, wenn sie durch den wenigstens einen Hardwarecomputerprozessor ausgeführt werden, den wenigstens einen Hardwarecomputerprozessor veranlassen, das Verfahren nach jeglichem vorhergehenden Anspruch durchzuführen.

17. Nicht-flüchtiges computerlesbares Medium, welches darauf gespeicherte computerlesbare Anweisungen aufweist, welche, wenn sie durch einen Computerprozessor ausgeführt werden, den Computerprozessor veranlassen, das Verfahren nach jeglichem der Ansprüche 1-15 durchzuführen.

**Revendications**

1. Procédé mis en oeuvre par ordinateur pour entraîner un réseau neuronal qui est un réseau antagoniste génératif (GAN) afin de déterminer des pondérations de fonction de mappage qui sont optimisées pour générer des données d'image de profondeur synthétisées à partir de données d'image bidimensionnelles, le procédé comprenant les étapes consistant à :

recevoir (302) des données d'entraînement, les données d'entraînement comprenant au moins un ensemble de données d'image bidimensionnelles et des données d'image de profondeur co-enregistrées correspondantes ;
entraîner (304) un premier générateur du GAN, avec les données d'entraînement, pour développer un ensemble de pondérations de fonction de mappage pour un mappage entre des ensembles de données d'image bidimensionnelles et des données d'image de profondeur co-enregistrées correspondantes ;

appliquer (306) les pondérations de fonction de mappage, par un second générateur du GAN, à un premier ensemble de données d'images bidimensionnelles, afin de générer ainsi des données de profondeur synthétisées correspondant à l'ensemble de données d'images bidimensionnelles ;

traiter (308) les données de profondeur synthétisées, par un générateur inverse du GAN, pour transformer les données de profondeur en un second ensemble de données d'image bidimensionnelles ;

comparer (310) le premier ensemble de données d'images bidimensionnelles au second ensemble de données d'images bidimensionnelles et générer un signal d'erreur basé sur la comparaison ;

ajuster (312) l'ensemble de pondérations de fonction de mappage sur la base du signal d'erreur ; et

répéter les étapes d'application (306), de traitement (308), de comparaison (310) et d'ajustement (312) jusqu'à ce qu'un critère final spécifié soit satisfait.

2. Procédé selon la revendication 1, dans lequel le réseau neuronal est un réseau antagoniste génératif enseignant-élève (TS-GAN), le TS-GAN comprenant un composant enseignant constitué du premier générateur en tant que générateur enseignant et d'un discriminateur enseignant, le TS-GAN comprenant également un composant étudiant constitué du second générateur en tant que générateur étudiant, d'un générateur inverse étudiant, et d'un discriminateur étudiant, le générateur étudiant partageant un ensemble commun de pondérations avec le générateur enseignant.

3. Procédé selon la revendication 1 ou la revendication 2, dans lequel le premier générateur et le second générateur sont mis en oeuvre sous forme de la même instance d'un générateur.

4. Procédé selon la revendication 2, dans lequel le générateur enseignant et le générateur étudiant sont mis en oeuvre sous forme d'instances distinctes d'un générateur ayant le même ensemble de pondérations de fonction de mappage.

5. Procédé selon l'une quelconque des revendications précédentes, dans lequel les données d'image bidimensionnelles sont des données d'image RVB.

6. Procédé selon l'une quelconque des revendications 1 à 5, dans lequel les données d'image bidimensionnelles sont des données faciales représentant un visage d'une personne.

7. Procédé selon l'une quelconque des revendications 1 à 5, dans lequel les données d'image bidimensionnelles représentent au moins l'un parmi des objets, véhicules ou machines sur une chaussée.

8. Procédé selon l'une quelconque des revendications précédentes, comprenant en outre l'utilisation des données d'image bidimensionnelles et des données de profondeur synthétisées pour une reconnaissance d'image.

9. Procédé selon l'une quelconque des revendications précédentes, dans lequel les données d'image bidimensionnelles et les données de profondeur sont stockées dans un fichier unique.

10. Procédé selon la revendication 2 ou l'une quelconque des revendications 3 à 9 lorsqu'elles dépendent de la revendication 2, dans lequel une perte du discriminateur enseignant est déterminée sur la base de l'équation suivante :

$$\mathcal{L}(D_{depth}) = \frac{1}{2}\mathbb{E}_{B_t \sim p_{data}(B_t)}[(D_{depth}(B_t) - 1)^2]$$
$$+ \frac{1}{2}\mathbb{E}_{A_t \sim p_{gen}(A_t)}[(D_{depth}(G_{A2B}(A_t))^2],$$

où :

$\mathbb{E}_{B_t}$ représente une image de profondeur échantillonnée à partir des données d'entraînement $P_{train}(A_t, B_t)$;
$A_t$ représente un ensemble de données d'image bidimensionnelles ;
$B_t$ représente des données de profondeur correspondant à $A_t$ ; et
$G_{A2B}$ est la fonction de mappage.

**11.** Procédé selon la revendication 2 ou l'une quelconque des revendications 3 à 10 lorsqu'elles dépendent de la revendication 2, dans lequel une perte euclidienne du discriminateur enseignant est déterminée sur la base de l'équation suivante :

$$\mathcal{L}_{pixel} = (\frac{1}{n}) \sum_{i=1}^{n} |B_t - G_{A2B}(A_t)|$$

.

**12.** Procédé selon la revendication 2 ou l'une quelconque des revendications 3 à 11 lorsqu'elles dépendent de la revendication 2, dans lequel une perte du discriminateur étudiant est déterminée sur la base de l'équation suivante :

$$\mathcal{L}(D_{RGB}) = \frac{1}{2}\mathbb{E}_{A_r \sim p_{target}(A_r)}[(D_{RGB}(A_r) - 1)^2]$$
$$+ \frac{1}{2}\mathbb{E}_{A_r \sim p_{target}(A_r)}[(D_{RGB}(G_{B2A}(G_{A2B}(A_r))))^2].$$

où :

$p_{target}(A_r)$ représente la distribution d'un ensemble de données cibles à bidimensionnelles ;

$\mathbb{E}_{A_r}$ représente une image échantillonnée à partir de $p_{target}(A_r)$ ;

$G_{A2B}$ est la fonction de mappage ; et
$G_{B2A}$ est la fonction de mappage inverse.

**13.** Procédé selon la revendication 2 ou l'une quelconque des revendications 3 à 12 lorsqu'elles dépendent de la revendication 2, dans lequel au moins l'un parmi le générateur enseignant, le générateur étudiant, et le générateur inverse étudiant comprend un réseau de neurones convolutifs.

**14.** Procédé selon la revendication 13, dans lequel les données d'image bidimensionnelles et les données de profondeur synthétisées ont une taille de 128 × 128 × 3, et dans lequel une partie codeur du générateur étudiant et une partie codeur du générateur enseignant comprennent la structure suivante :

3 couches de convolution appliquant une fonction d'activation linéaire rectifiée (ReLU) ;
une quantité de cartes de caractéristiques est progressivement augmentée de 64 à 128 à 256 avec une taille de noyau de 7 × 7 et une avancée (stride) de 1 pour la première couche ; et
les couches suivantes utilisent une taille de noyau de 3 × 3 et une avancée de 2 suivies de 6 blocs résiduels, constitués de 2 couches de convolution ayant chacune une taille de noyau de 3 × 3 et une avancée de 2 ; et
dans lequel une partie décodeur finale du générateur comprend la structure suivante :

3 couches de déconvolution pour un suréchantillonnage en appliquant une fonction d'activation linéaire rectifiée (ReLU) ;
une quantité de cartes de caractéristiques est graduellement diminuée de 128 à 64 à 3 ; et
une dernière couche de déconvolution, qui est utilisée pour remapper les caractéristiques sur des images, utilise une taille de noyau de 7 × 7 et une avancée de 1, avec une fonction d'activation tanh.

**15.** Procédé selon l'une quelconque des revendications précédentes, dans lequel il existe de multiples itérations des étapes de réception, d'entraînement, d'application, de traitement, et d'ajustement.

**16.** Système informatique configuré pour entraîner un réseau neuronal qui est un réseau antagoniste génératif (GAN) afin de déterminer des pondérations de fonction de mappage qui sont optimisées pour générer des données d'image de profondeur synthétisées à partir de données d'image bidimensionnelles, le système comprenant :

au moins un processeur informatique matériel opérationnel pour exécuter des instructions lisibles par ordinateur ; et
au moins un dispositif de mémoire non-transitoire sur lequel sont stockées des instructions exécutables par ordinateur, qui, lorsqu'elles sont exécutées par le au moins un processeur informatique matériel, amènent le au moins un processeur informatique matériel à effectuer le procédé selon l'une quelconque des revendications précédentes.

17. Support non-transitoire lisible par ordinateur sur lequel sont stockées des instructions lisibles par ordinateur qui, lorsqu'elles sont exécutées par un processeur informatique, amènent le processeur informatique à effectuer le procédé selon l'une quelconque des revendications 1 à 15.

**FIG. 1**

**FIG. 2**

FIG. 3

FIG. 4

FIG. 5

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Learning to generate facial depth maps. **STEFANO PINI ; FILIPPO GRAZIOLI ; GUIDO BORGHI ; ROBERTO VEZZANI ; RITA CUCCHIARA.** 2018 International Conference on 3D Vision (3DV). IEEE, 2018, 634-642
- **DONG-HOON KWAK ; SEUNG-HO LEE.** A novel method for estimating monocular depth using cycle gan and segmentation. *Sensors,* 2020, vol. 20 (9), 2567
- **JIYUN CUI ; HAO ZHANG ; HU HAN ; SHIGUANG SHAN ; XILIN CHEN.** Improving 2D face recognition via discriminative face depth estimation. *International Conference on Biometrics,* 2018, 140-147
- **ZHAN-LI SUN ; KIN-MAN LAM.** Depth estimation of face images based on the constrained ica model,. *IEEE transactions on information forensics and security,* 2011, vol. 6 (2), 360-370
- **ZHAN-LI SUN ; KIN-MAN LAM ; QING-WEI GAO.** Depth estimation of face images using the nonlinear least-squares model. *IEEE transactions on image processing,* 2012, vol. 22 (1), 17-30
- **MIAOMIAO LIU ; MATHIEU SALZMANN ; XUMING HE.** Discrete-continuous depth estimation from a single image. *Proceedings of the IEEE Conference on Computer Vision and Pattern Recognition,* 2014, 716-723
- **WEI ZHUO ; MATHIEU SALZMANN ; XUMING HE ; MIAOMIAO LIU.** Indoor scene structure analysis for single image depth estimation. *Proceedings of the IEEE conference on computer vision and pattern recognition,* 2015, 614-622
- Effective 3d face depth estimation from a single 2d face image. **DEZHI KONG ; YANG YANG ; YUN-XIA LIU ; MIN LI ; HONGYING JIA.** 2016 16th International Symposium on Communications and Information Technologies (ISCIT). IEEE, 2016, 221-230

- **FLORIAN SCHROFF ; DMITRY KALENICHENKO ; JAMES PHILBIN.** Facenet: A unified embedding for face recognition and clustering. *Proceedings of the IEEE conference on computer vision and pattern recognition,* 2015, 815-823
- On RGB-D face recognition using Kinect. **GAURAV GOSWAMI ; SAMARTH BHARADWAJ ; MAYANK VATSA ; RICHA SINGH.** International Conference on Biometrics: Theory, Applications and Systems. IEEE, 2013, 1-6
- **BILLY YL LI ; AJMAL S MIAN ; WANQUAN LIU ; ANEESH KRISHNA.** Face recognition based on Kinect. *Pattern Analysis and Applications,* 2016, vol. 19 (4), 977-987
- **ANURAG CHOWDHURY ; SOUMYADEEP GHOSH ; RICHA SINGH ; MAYANK VATSA.** RGB-D face recognition via learning-based reconstruction. *International Conference on Biometrics Theory, Applications and Systems,* 2016, 1-7
- **HAO ZHANG ; HU HAN ; JIYUN CUI ; SHIGUANG SHAN ; XILIN CHEN.** RGB-D face recognition via deep complementary and common feature learning. *IEEE International Conference on Automatic Face & Gesture Recognition,* 2018, 8-15
- **LUO JIANG ; JUYONG ZHANG ; BAILIN DENG.** Robust RGB-D face recognition using attribute-aware loss. *IEEE Transactions on Pattern Analysis and Machine Intelligence,* 2020, vol. 42 (10), 2552-2566
- **TZU-YING LIN ; CHING-TE CHIU ; CHING-TUNG TANG.** RGBD based multi-modal deep learning for face identification. *IEEE International Conference on Acoustics, Speech and Signal Processing,* 2020, 1668-1672
- **HARDIK UPPAL ; ALIREZA SEPAS-MOGHADDAM ; MICHAEL GREENSPAN ; ALI ETEMAD.** Depth as attention for face representation learning. *International Conference of Pattern Recognition,* 2020